# EUROPEAN PATENT SPECIFICATION

(11) **EP 0 740 451 B1**
(45) Date of publication and mention of the grant of the patent: **06.06.2001**
(21) Application number: 95201040.3
(22) Date of filing: 24.04.1995
(51) Int. Cl.: H04M 11/06, H04L 5/26

(54) **Method, interface modules and telephone network for multiplexing and demultiplexing an analog MTS (message telephone service) signal and an ADSL (asymmetric digital subscriber line) datastream**
Verfahren, Schnittstellenmodule und Telefonnetz zum Multiplexen und Demultiplexen eines analogen MTS (Nachrichtentelefondienst) signals und eines ADSL (asymmetrische digitale Teilnehmerleitung) Datenstroms
Procédé, modules d'interface et réseau téléphonique pour multiplexage et démultiplexage d'un signal analogique MTS (service de message de téléphonie) et un flux de données ADSL (ligne d'abonné numérique, asymétrique)

(43) Date of publication of application: 30.10.1996
(73) Proprietor: ALCATEL, 75008 Paris (FR)
(72) Inventor: Mestdagh, Denis Julien Gilles, B-1090 Brussels (BE); Spruyt, Paul, B-3001 Heverlee (BE); Reusens, Peter Paul Frans, B-9270 Laarne (BE); op de Beeck, Edmond Celina Jozef, B-2800 Mechelen (BE)
(74) Representative: Narmon, Gisèle Marie Thérèse

(56) References cited:
- EP-A- 0 050 748
- US-A- 5 282 197
- SUPERCOMM/ICC '94, May 1994, NEW ORLEANS US pages 456 - 460 P. S. CHOW ET AL. 'A Multi-drop In-house ADSL Distribution Network'

## Description

The present invention relates to a method, interface modules and a telephone network for multiplexing and demultiplexing of an analog MTS (Message Telephone Service) signal, formerly known as an analog POTS (Plain Old Telephone Service) signal, and an ADSL (Asymmetric Digital Subscriber Line) datastream. The MTS (Message Telephone Service) signal comprises analog speech as well as telephone service signalling (e.g. ringing signal, metering pulses). Both the analog MTS (Message Telephone Service) signal and the ADSL (Asymmetric Digital Subscriber Line) datastream are simultaneously transmitted on a two-wire transmission line, a twisted pair telephone line. The above method, interface modules and telephone network are described in the preambles of claims 1, 6, 8 and 10 respectively.

A method as in the preamble of claim 1 is already known in the art, e.g. from the draft American National Standard for Telecommunications entitled 'Asymmetric Digital Subscriber Line (ADSL) Metallic Interface Specification', published by the American National Standards Institute (ANSI) in April 1994. Therein, simultaneous transmission of an analog MTS (Message Telephone Service) signal and an ADSL (Asymmetric Digital Subscriber Line) datastream is provided by frequency division multiplexing (FDM). A low frequency band is defined as the MTS (Message Telephone Service) band and a high frequency band is defined as the ADSL (Asymmetric Digital Subscriber Line) band (see e.g. section 6.12 on pages 45, 46 and section 8, page 59, second paragraph of the above cited draft Standard). The high frequency band is further subdivided in a first subband for downstream transmission and a second subband for upstream transmission. Both subbands may even overlap in case echo cancellation is used. However this is of no particular importance with respect to the present invention. In the mentioned draft ANSI-Standard it is further suggested in section 8 on pages 58-59 thereof, to use an ADSL/MTS splitter at each end of the two-wire transmission line to perform the necessary frequency division multiplexing and demultiplexing. Such an ADSL/MTS splitter is based on the use of frequency bandpass filters but due to the predefined filter requirements and the presence of telephone service signalling (e.g. ringing signal) which reaches high voltage levels, the ADSL/MTS splitter becomes very bulky and expensive.

An object of the present invention is to provide a method, interface modules and a telephone network for multiplexing and demultiplexing of an analog MTS (Message Telephone Service) signal and an ADSL (Asymmetric Digital Subscriber Line) datastream wherein the use of a bulky and expensive MTS/ADSL splitter, as suggested in the draft ANSI Standard, is avoided.

According to the present invention, this object is achieved by the method described in claim 1, the interface modules disclosed in claims 6 and 8 respectively, and the telephone network of claim 10.

In the way described in the above claims, the presence of the telephone service signalling (e.g. ringing signal) with high voltage levels is avoided by digitizing the analog MTS (Message Telephone Service) signal. Moreover the use of frequency bandpass filters which have to meet severe requirements becomes unnecessary due to the embedding of the digital MTS (Message Telephone Service) signal in frames comprised in the ADSL (Asymmetric Digital Subscriber Line) datastream. The low frequency band or MTS (Message Telephone Service) band even becomes free and could thus be occupied by the ADSL (Asymmetric Digital Subscriber Line) datastream.

In the equipment performing the method of claim 1, owing to the absence of bandpass filters to split the MTS (Message Telephone Service) signal from the ADSL (Asymmetric Digital Subscriber Line) datastream, filter leakage causing influence of the analog MTS (Message Telephone Service) signal on the ADSL (Asymmetric Digital Subscriber Line) datastream and vice versa in the known solution, is no longer a problem. Furthermore the method of claim 1 inherently provides an improvement of the transmission quality of the MTS (Message Telephone Service) signal and ADSL (Asymmetric Digital Subscriber Line) datastream. Indeed, full digital transmission of the MTS (Message Telephone Service) signal and absence in the known solution of ADSL (Asymmetric Digital Subscriber Line) datastream degradation, caused by the high voltage telephone service signalling, provides a better transmission quality compared to the known solution.

It is further noticed that in the present invention, bandpass filters can still be used to separate the mentioned first subband for ADSL (Asymmetric Digital Subscriber Line) downstream transmission and second subband for ADSL (Asymmetric Digital Subscriber Line) upstream transmission.

Furthermore, the protection of the ADSL (Asymmetric Digital Subscriber Line) datastream AD from all MTS (Message Telephone Service) related signals (e.g. dial pulses, ringing signal, ring tip, metering pulses, ... ), which is a difficulty already recognized in the draft ANSI Standard, section 8, page 58, is no longer an issue of the present invention because the MTS (Message Telephone Service) related signals are absent on the transmission line in the present telephone network.

Another feature of the present invention is that in the implementation of the method and both interface modules described in claim 2, 7 and 9 respectively, MTS (Message Telephone Service) or plain old telephone service is guaranteed, even in case the digitization of the analog MTS (Message Telephone Service) signal or the embedding thereof into frames of the ADSL (Asymmetric Digital Subscriber Line) datastream fails. Indeed, as described in claim 2, in case of failure, MTS (Message Telephone Service) is maintained via analog transport of the MTS (Message Telephone Service) signal. Additional equipment to be included in the interface modules according to the present invention enabling this analog transport are described in claims 7 and 9 respectively.

A further characteristic feature of the present method is that the digitization of the analog MTS (Message Telephone Service) signal is performed in 3 substeps as described in claim 3. In this way, by fractionizing the analog MTS (Message Telephone Service) signal, high voltage telephone service signalling such as the ringing signal is separated from the analog speech before both are converted to a digital form independently. The digitization of analog speech is then performed by traditional analog to digital conversion and coding (e.g. A-law or µ-law coding), whilst the high voltage telephone service signalling is transformed into a digital code by an encoder. The digital speech and digital code then form part of the digital MTS (Message Telephone Service) signal which is embedded in the ADSL (Asymmetric Digital Subscriber Line) datastream in the second step.

An additional advantage of the present invention is the possibility to handle metering bursts (information sent from central office to particular subscribers e.g. to enable billing calculations ) at a frequency of 12 kHz or 16 kHz. In the known solution with MTS/ADSL splitters, these metering bursts enter the upstream ADSL frequency band and therefore disturb the ADSL data transmission therein. In the present telephone network only control information (instead of a burst) needs to be transmitted. The 12 kHz or 16 kHz bursts are restored at the subscriber's side.

Different ways can be thought off to perform the second step of claim 1. A first way to execute the embedding of the digital MTS (Message Telephone Service) signal in the ADSL (Asymmetric Digital Subscriber Line) datastream is described in claim 4. In section 6.9 on pages 43 and 44 of the draft ANSI Standard cited above, the DMT (Discrete Multi Tone) technique is recommended as the modulation method for ADSL (Asymmetric Digital Subscriber Line) datastreams. ADSL (Asymmetric Digital Subscriber Line) datastreams thus become modulated on a set of equidistant carriers. The DMT (Discrete Multi Tone) modulation technique and equipment to perform this technique are known e.g. from the article 'A Multicarrier E1-HDSL Transceiver System with Coded Modulation', written by Peter S. Chow, Naofal Al-Dhahir, John M. Cioffi and John A.C. Bingham and published in the issue Nr. 3 May/June 1993 in the journal of European Transactions on Telecommunications and Related Technologies (ETT), pages 257-266 and from the article 'Performance Evaluation of a Multichannel Transceiver System for ADSL and VHDSL Services' from Peter S. Chow et al., published in the issue Nr. 6 August 1991 of the journal of European Transactions on Telecommunications and Related Technologies (ETT), pages 909-919. This technique will therefore not be described in further detail in this application. However, for further explanations in the description one should know that one of the equidistant carriers (see paragraph 6.9.1.2 of the ANSI draft standard) is not modulated for purposes of synchronization. This particular carrier is called pilot subcarrier.

In a first implementation of the present invention described in claim 4, embedding of the digital MTS (Message Telephone Service) signal in the ADSL (Asymmetric Digital Subscriber Line) datastream is obtained by modulating the digital MTS (Message Telephone Service) signal on a subset of carriers which forms part of a set of carriers whereon the transmit signal is modulated.

Another implementation of the present invention is described in claim 5. Therein, the digital MTS (Message Telephone Service) signal is packed in ATM (Asynchronous Transfer Mode) cells which are embedded in the ADSL (Asymmetric Digital Subscriber Line) frames (see page 11, paragraph 5.1.3 of the draft ANSI Standard).

It seems to be a disadvantage inherent to the present invention that ADSL (Asymmetric Digital Subscriber Line) services will be provided at a lower transmission rate because part of the ADSL bandwidth is used for MTS (Message Telephone Service) transmission. This is not true because the frequency band normally occupied by the MTS (Message Telephone Service) signal is now available for ADSL (Asymmetric Digital Subscriber Line) services. The ADSL (Asymmetric Digital Subscriber Line) capacity will therefore increase significantly.

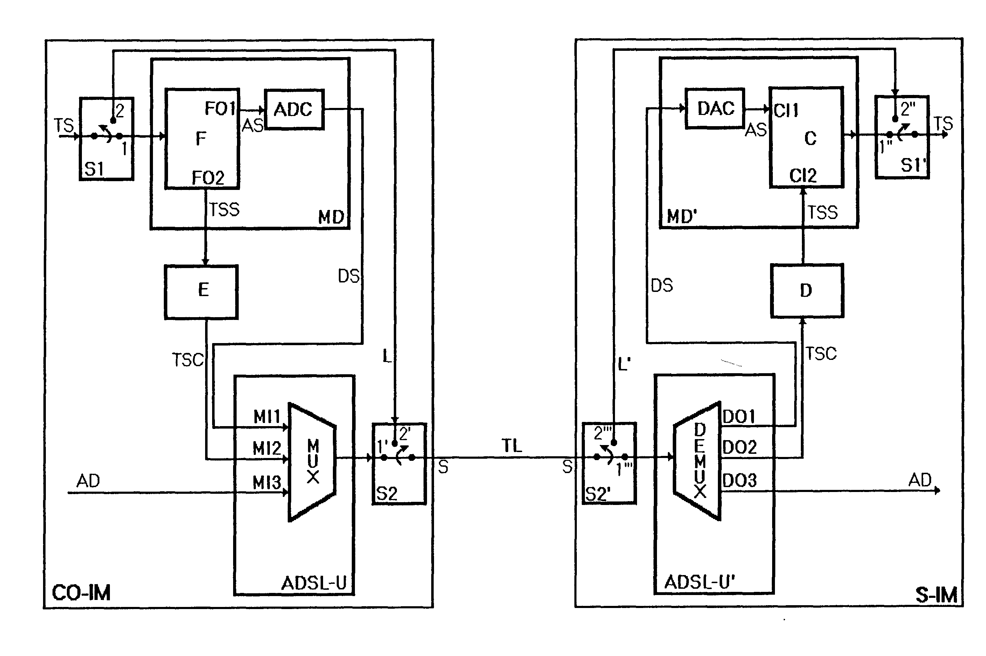

The above mentioned and other objects and features of the invention will become more apparent and the invention itself will be best understood by referring to the following description of an embodiment taken in conjunction with the accompanying drawing which is a schematic representation of an embodiment of a telephone network according to the present invention, including interface modules according to the present invention.

The telephone network shown in the figure comprises a central office and a plurality of subscriber stations coupled to the central office via twisted pair telephone cables. The central office and subscriber stations are not explicitly shown in the figure. Shown in the figure are interface modules (CO-IM, S-IM) included in the central office and subscriber stations. A first interface module CO-IM forms part of the central office, whilst a second interface module S-IM is included in a subscriber station. These interface modules, CO-IM and S-IM, provide access to the twisted pair transmission line TL which couples the subscriber station to the central office.

The subscriber station interface module S-IM and central office interface module CO-IM include multiplexing means and demultiplexing means for multiplexing and demultiplexing an analog MTS (Message Telephone Service) signal TS and an ADSL (Asymmetric Digital Subscriber Line) datastream AD. In the figure however, only the multiplexing means of the central office interface module CO-IM and the demultiplexing means of the subscriber station interface module S-IM are drawn, the demultiplexing means of the central office interface module CO-IM and the multiplexing means of the subscriber interface module S-IM being similar.

In the following paragraphs, the multiplexing means and demultiplexing means of the figure will be described and the working thereof will be explained in detail.

The central office interface module CO-IM includes an MTS (Message Telephone Service) mirror device MD, an encoder E and an ADSL (Asymmetric Digital Subscriber Line) unit ADSL-U. In addition the embodiment shown is equipped with first switching means S1, second switching means S2 and an independent link line L. The MTS (Message Telephone Service) mirror device MD is provided with a fractionizing unit F and an analog to digital converter ADC, whilst the ADSL (Asymmetric Digital Subscriber Line) unit ADSL-U includes a multiplexer MUX. Switching means S1 has an input which in fact is an MTS (Message Telephone Service) input of the multiplexing means and two outputs: a first state output 1 and a second state output 2. Switching means S2 is provided with a first state input 1', a second state input 2' and an output which is coupled to the twisted pair transmission line TL.

The first state output 1 of first switching means S1 is connected to an input of the fractionizing unit F in the MTS (Message Telephone Service) mirror device MD. The analog to digital converter ADC couples a first output FO1 of the fractionizing unit F to a first input MI1 of the multiplexer MUX in the ADSL (Asymmetric Digital Subscriber Line) unit ADSL-U. In a similar way, the encoder E couples a second output F02 of the fractionizing unit F to a second input MI2 of the multiplexer MUX. A third input MI3 of the multiplexer MUX in fact represents an ADSL (Asymmetric Digital Subscriber Line) input of the multiplexing means included in the central office. The output of the multiplexer MUX is connected to the first state input 1' of the second switching means S2. The independent link line L is coupled between the second state output 2 of first switching means S1 and the second state input 2' of the second switching means S2, and thus provides a direct alternative connection between the MTS input and the twisted pair transmission line TL, on the condition that both switches S1 and S2 are brought in their second state. Before describing this second state in further detail, the first state working mode or normal working mode of the present telephone network will be described.

In its normal working mode, i.e. when the first and second switching means, S1 and S2, operate in their first state (input of S1 connected to the first state output 1 and output of S2 connected to the first state input 1'), an analog MTS (Message Telephone Service) signal TS is applied to the input of the fractionizing unit F via the first switching means S1. Fractionizing unit F fractionizes this analog MTS (Message Telephone Service) signal TS, i.e. F subtracts the telephone service signalling TSS (e.g. ringing signal, metering pulses, ring-tip, ... ) from the analog MTS (Message Telephone Service) signal TS, applies this telephone service signalling TSS via its second output F02 to the encoder E, and applies the remaining analog speech AS via its first output FO1 to the analog to digital converter ADC. The analog to digital converter ADC converts the analog speech AS supplied to its input into digital speech DS, whilst the encoder E transforms the telephone service signalling TSS into a telephone service code TSC. The analog MTS (Message Telephone Service) signal TS originally applied to the multiplexing means, is thus in a first step transformed into a digital form, DS and TSC, which in the particular embodiment of the figure is the combination of digital speech DS and a telephone service code TSC. In a second step, this digitized MTS (Message Telephone Service) signal, DS and TSC, is embedded into frames of the ADSL (Asymmetric Digital Subscriber Line) datastream AD supplied to the multiplexer MUX via its third input MI3. In this way, a new ADSL (Asymmetric Digital Subscriber Line) datastream, called transmit signal S, is generated. Via second switching means S2, this transmit signal S is applied to the twisted pair transmission line TL to be transmitted towards the subscriber station. The embedding of the digital MTS (Message Telephone Service) signal, DS and TSC, in the ADSL (Asymmetric Digital Subscriber Line) datastream AD is performed by the multiplexer MUX.

In a first implementation of the present invention, the multiplexer MUX represents a traditional DMT (Discrete Multi Tone) modulator. A block scheme of such a DMT (Discrete Multi Tone) modulator is described e.g. in the already cited article 'A Multicarrier E1-HDSL Transceiver System with Coded Modulation', written by P. Chow, Naofal Al-Dhahir, John M. Cioffi, and John A.C. Bingham and published in the issue Nr. 3 May/June 1993 in the journal of European Transactions on Telecommunications and Related Technologies (ETT), pages 257-266. In this first implementation, the ADSL (Asymmetric Digital Subscriber Line) unit ADSL-U in fact represents the modulating/demodulating unit or DASP-unit (DMT ADSL Signal Processor) of the traditional ADSL equipment. This modulating/demodulating unit, as recommended in section 6.9 of the draft ANSI standard on pages 43-44, modulates signals onto a set of carriers with equidistant frequencies by using the DMT (Discrete Multi Tone) technique. Modulating the digital speech DS and telephone service code TSC onto a subset of carriers comprised in the set of equidistant carriers is thus a first implementation of the embedding step of the present invention.

It is noted here that for ADSL (Asymmetric Digital Subscriber Line) services, the data modulated onto the pilot subcarrier, which is a reserved carrier of the set of carriers with equidistant frequencies, is a constant. The pilot subcarrier in other words remains unmodulated, and can easily be used for resolution of sample timing or synchronization between transmitter and receiver (see draft ANSI Standard, paragraph 6.9.1.2, page 43). If the digital speech DS and the telephone service code TSC are modulated onto this pilot subcarrier, the pilot subcarrier can still be used for synchronization purposes. The pilot subcarrier thus may form part of the subset of carriers whereon the digital MTS (Message Telephone Service) signal is modulated.

In a second implementation of the present invention, the multiplexer MUX represents the cascade connection of an ATM (Asynchronous Transfer Mode) embed unit, which embeds the digital MTS (Message Telephone Service) signal DS, TSC in a sequence of ATM (Asynchronous Transfer Mode) cells, and an ADSL (Asymmetric Digital Subscriber Line) embed unit, which embeds the ATM (Asynchronous Transfer Mode) cells in frames out of the ADSL (Asymmetric Digital Subscriber Line) datastream AD. In this second implementation, the ADSL (Asymmetric Digital Subscriber Line) unit ADSL-U represents the interleaving unit or CHAP (Channel Processor) unit of the traditional ADSL equipment. ATM (Asynchronous Transfer Mode) technique is well known, e.g. from the book 'Asynchronous Transfer Mode, solution for broadband ISDN' written by M. De Prycker and published in 1991 by Ellis Horwood. The embedding of ATM (Asynchronous Transfer Mode) cells in ADSL (Asymmetric Digital Subscriber Line) dataframes on the other hand, is suggested in section 5.1.3 of the draft ANSI Standard, page 11.

As is stated in section 8, first paragraph on page 59, of the draft ANSI Standard, continuity through the voice band (or MTS band) has to be maintained, and telephone service may not be interrupted if the ADSL equipment fails. This telephone service is guaranteed in the known solution with MTS/ADSL splitters and can be guaranteed also in the present invention by including the switching means S1 and S2, and the independent link line L. When brought in their second state, the first and second switching means, S1 and S2, transfer the interface module CO-IM from its normal working mode to a failure mode. By connecting the input of S1 to the second output 2 thereof and by connecting the second input 2' of S2 to the output thereof, the analog MTS (Message Telephone Service) signal TS in this failure mode is transported in its analog form from the MTS input to the twisted pair transmission line TL.

The subscriber interface module S-IC includes an MTS (Message Telephone Service) mirror device MD', a decoder D and an ADSL (Asymmetric Digital Subscriber Line) unit ADSL-U'. In addition, the subscriber interface module S-IC includes first switching means S1', second switching means S2' and an independent link line L'. The MTS (Message Telephone Service) mirror device MD' is provided with a combining unit C and a digital to analog converter DAC, whilst the ADSL (Asymmetric Digital Subscriber Line) unit ADSL-U' is equipped with a demultiplexer DEMUX. The first switching means S1' has a first state input 1'' and a second state input 2'', and its output is an MTS output of the demultiplexing means in the present interface module S-IM. Similarly, the second switching means S2' has a first state output 1''' and a second state output 2''', whilst its input is coupled to the twisted pair transmission line TL.

The first state output 2''' of second switching means S2' is coupled to an input of the demultiplexer DEMUX which forms part of the ADSL (Asymmetric Digital Subscriber Line) unit ADSL-U'. The digital to analog converter DAC couples a first output DO1 of the demultiplexer DEMUX to a first input CI1 of the combining unit C, and the decoder D couples a second output D02 of the demultiplexer DEMUX to a second input CI2 of the combining unit C. A third output D03 of the demultiplexer DEMUX represents an ADSL output of the demultiplexing means. An output of the combining unit C is coupled to the first state input 1'' of the first switching means S1'. The independent link L' is coupled between the second state output 2''' of the second switching means S2' and the second state input 2'' of the first switching means S1', and, on the condition that the first and second switching means, S1' and S2', are brought in their second state, provides a direct connection between the twisted pair transmission line TL and the MTS output.

In the normal working mode, the input and first state output 1''' of second switching means S2' are connected and the first state input 1'' and output of first switching means S1' are connected in such a way that the transmit signal S on the twisted pair transmission line TL is applied to the demultiplexer DEMUX. From this transmit signal S, the demultiplexer DEMUX extracts the digital speech DS and telephone service code TSC and applies them to its first and second output, DO1 and DO2, respectively. The remaining ADSL (Asymmetric Digital Subscriber Line) datastream AD is applied to the third output DO3 of the demultiplexer DEMUX. The digital speech DS is converted to analog speech AS by the digital to analog converter DAC, whilst the telephone service code TSC is transformed into telephone service signalling TSS by the decoder D. In the combining unit C, the analog speech AS and telephone service signalling TSS are combined to constitute the analog MTS (Message Telephone Service) signal TS, which is supplied to the MTS output via the first switching means S1'.

Corresponding to the above described first and second implementation of the multiplexer MUX, a first and second implementation of the demultiplexer DEMUX will be described in the next paragraphs.

In the first implementation of the demultiplexer DEMUX represents a DMT (Discrete Multi Tone) demodulator, which forms part of a modulating/demodulating unit or DASP (DMT ADSL Signal Processor) unit, represented in the figure by the ADSL (Asymmetric Digital Subscriber Line) unit ADSL-U'. In this embodiment of the demultiplexer DEMUX, data demodulated from the above mentioned subset of carriers constitute the digital MTS (Message Telephone Service) signal comprising the digital speech DS and the telephone service code TSC, routed to the first and second demultiplexer output, DO1 and DO2 respectively. The data demodulated from other carriers constitute the ADSL (Asymmetric Digital Subscriber Line) datastream AD and are applied to the third output D03 of the demultiplexer DEMUX.

In the second implementation, demultiplexer DEMUX represents the cascade connection of an ATM extracting unit, which extracts ATM (Asynchronous Transfer Mode) cells filled with the digital MTS (Message Telephone Service) signal DS, TSS from the transmit signal S, and an ATM converting unit, which converts these ATM (Asynchronous Transfer Mode) cells into the digital speech DS and telephone service code TSC.

To maintain telephone service even if the ADSL (Asymmetric Digital Subscriber Line) equipment fails, switching means S1' and S2' can be brought in a second state, to enter a failure mode wherein the analog MTS (Message Telephone Service) signal TS is transported in its analog form via independent link L' from the twisted pair transmission line TL to the MTS output. Thereto the input and second state output 2''' of second switching means S2' are connected, and the second state input 2'' and output of first switching means S1 are connected in the failure mode.

Evidently, if the multiplexing means are brought in the failure mode, the demultiplexing means also have to be brought in the failure mode, and vice versa. Both transmitter and receiver are thus working either in the normal working mode or in the failure mode. To transit between normal mode and failure mode, a message is sent from central office to subscriber or vice versa every time the ADSL equipment fails.

To enable communication between the central office and subscriber stations in two directions, the central office and subscriber stations need to include multiplexing means as well as demultiplexing means. The above described multiplexing means and demultiplexing means could be implemented in one single interface module which is used in the central office and subscriber stations. In this interface module, the combining unit C and fractionizing unit F could be integrated in one unit which performs both inverse functions, fractionizing and combining. Similarly, the analog to digital converter ADC and digital to analog converter DAC could be put together to constitute one unit. The ADSL (Asymmetric Digital Subscriber Line) units, ADSL-U and ADSL-U', include a multiplexer MUX as well as a demultiplexer DEMUX, and the encoder E and decoder D could be integrated in one encoding/decoding unit working in two directions.

It is further noted that the multiplexing means and demultiplexing means as described above are transparent from the point of view of the subscriber. Existing subscriber equipment can thus still be used.

Moreover it is noticed that a 40 kHz bandwidth, being the bandwidth of the MTS (Message Telephone Service) band, becomes free when implementing the present invention. This bandwidth is available now for ADSL (Asymmetric Digital Subscriber Line) transmission.

The working of the embodiment of the present telephone network shown in the figure is made only by way of a functional description of the blocks shown therein. Based on the above description, implementation of the functional blocks F, D, C, E, ... however is obvious to a person skilled in the art and will therefore not be described in further details.

While the principles of the invention have been described above in connection with specific apparatus, it is to be clearly understood that this description is made only by way of example and not as a limitation on the scope of the invention.

## Claims

1. A method for multiplexing and demultiplexing an analog MTS (Message Telephone Service) signal (TS), comprising analog speech (AS) as well as telephone service signalling (TSS), and an ADSL (Asymmetric Digital Subscriber Line) datastream (AD) for simultaneous transmission thereof over a transmission line (TL), characterized in that said multiplexing comprises a first step wherein said analog MTS (Message Telephone Service) signal (TS) is converted into a digital MTS (Message Telephone Service) signal (DS, TSC), and a second step wherein said digital MTS (Message Telephone Service) signal (DS, TSC) is embedded into dataframes comprised in said ADSL (Asymmetric Digital Subscriber Line) datastream (AD), thereby generating a transmit signal (S) which is applied to said transmission line (TL), and that said demultiplexing comprises a third step wherein said transmit signal (S) is split up into said digital MTS (Message Telephone Service) signal (DS, TSC) and said ADSL (Asymmetric Digital Subscriber Line) datastream (AD), and a fourth step wherein said digital MTS (Message Telephone Service) signal (DS, TSC) is converted into said analog MTS (Message Telephone Service) signal (TS).

2. A method according to claim 1, characterized in that , in case a failure occurs in said first step, said second step, said third step or said fourth step, telephone service is maintained by transporting said analog MTS (Message Telephone Service) signal (TS) in its analog form to and from said transmission line (TL) respectively via independent link lines (L, L').

3. A method according to claim 1, characterized in that in said multiplexing, said first step comprises a first substep wherein said analog MTS (Message Telephone Service) signal (TS) is fractionized into said analog speech (AS) and said telephone service signalling (TSS), a second substep wherein said analog speech (AS) is converted into digital speech (DS), and a third substep wherein said telephone service signalling (TSS) is encoded into a telephone service code (TSC), said digital speech (DS) and said telephone service code (TSC) both forming part of said digital MTS (Message Telephone Service) signal (DS, TSC), and furthermore that in said demultiplexing, said fourth step comprises a fourth substep wherein said telephone service code (TSC) is decoded into said telephone service signalling (TSS), a fifth substep wherein said digital speech (DS) is converted into said analog speech (AS), and a sixth substep wherein said analog speech (AS) and said telephone service signal (TSS) are combined, thereby obtaining said analog MTS (Message Telephone Service) signal (TS).

4. A method according to claim 1, characterized in that in said multiplexing, said second step is performed by modulating said digital MTS (Message Telephone Service) signal (DS, TSC) on a subset of carriers which form part of a set of carriers whereon said ADSL (Asymmetric Digital Subscriber Line) datastream (AD) is modulated to form said transmit signal (S), and that in said demultiplexing, said third step is performed by demodulating said digital MTS (Message Telephone Service) signal (DS, TSC) from said subset of carriers, whilst said ADSL (Asymmetric Digital Subscriber Line) datastream (AD) is demodulated from other carriers comprised in said set of carriers.

5. A method according to claim 1, characterized in that in said multiplexing, said second step comprises a substep wherein said digital MTS (Message Telephone Service) signal (DS, TSC) is packed into ATM (Asynchronous Transfer Mode) cells, and an additional substep wherein said ATM (Asynchronous Transfer Mode) cells are embedded in said ADSL (Asymmetric Digital Subscriber Line) datastream (AD) thereby generating said transmit signal (S), and furthermore that in said demultiplexing, said third step comprises an inverse substep wherein said ATM (Asynchronous Transfer Mode) cells are regenerated from said transmit signal (S), and an additional inverse substep wherein said ATM (Asynchronous Transfer Mode) cells are unpacked into said digital MTS (Message Telephone Service) signal (DS, TSC).

6. An interface module (CO-IM, S-IM) adapted to multiplex an analog MTS (Message Telephone Service) signal (TS), comprising analog speech (AS) as well as telephone service signalling (TSS), and an ADSL (Asymmetric Digital Subscriber Line) datastream (AD) to be simultaneously applied to a two-wire transmission line (TL) coupled to said interface module (CO-IM, S-IM), characterized in that said interface module (CO-IM, S-IM) includes a fractionizing unit (F), to an input of which said analog MTS (Message Telephone Service) signal (TS) is applied and which is adapted to fractionize said analog MTS( Message Telephone Service) signal (TS) to thereby generate said analog speech (AS) applied to a first output (FO1) thereof and said telephone service signalling (TSS) applied to a second output (FO2) thereof, an analog to digital converter (ADC), whose input is coupled to said first output (FO1) of said fractionizing unit (F) and which is provided to convert said analog speech (AS) into digital speech (DS), an encoder (E) coupled at its input to said second output (FO2) of said fractionizing unit (F) and provided to encode said telephone service signalling (TSS) into a telephone service code (TSC), and a multiplexer (MUX) to first (MI1), second (MI2) and third (MI3) inputs of which said digital speech (DS), said telephone service code (TSC) and said ADSL (Asymmetric Digital Subscriber Line) datastream (AD) are supplied respectively and which is provided to embed said digital speech (DS) and said telephone service code (TSC), which both form part of a digital MTS (Message Telephone Service) signal (DS, TSC), in frames comprised in said ADSL (Asymmetric Digital Subscriber Line) datastream (AD).

7. An interface module (CO-IM, S-IM) according to claim 6, characterized in that said interface module (CO-IM, S-IM) further includes first switching means (S1) with at least a first state output (1) connected to said input of said fractionizing unit (F) and a second state output (2) connected to a first end of an independent link line (L), and to an input of which said analog MTS (Message Telephone Service) signal (TS) is applied, and second switching means (S2) with at least a first state input (1') connected to an output of said multiplexer (MUX) and a second state input (2') connected to a second end of said independent link line (L) and an output of which is coupled to said two-wire transmission line (TL), in such a way that when said first and second switching means (S1, S2) are brought in their second state, said analog MTS (Message Telephone Service) signal (TS) is applied in its analog form to said two-wire transmission line (TL) via the cascade connection of said first switching means (S1), said link line (L), and said second switching means (S2).

8. An interface module (CO-IM, S-IM) adapted to demultiplex an analog MTS (Message Telephone Service) signal (TS), comprising analog speech (AS) as well as telephone service signalling (TSS), and an ADSL (Asymmetric Digital Subscriber Line) datastream (AD) from a transmit signal (S) applied to said interface module (CO-IM, S-IM) via a transmission line (TL) coupled to said interface module (CO-IM, S-IM), characterized in that said interface module (CO-IM, S-IM) includes a demultiplexer (DEMUX) whose input is coupled to said transmission line (TL) and which is adapted to demultiplex said transmit signal (S) and to thereby generate digital speech (DS), a telephone service code (TSC) and said ADSL (Asymmetric Digital Subscriber Line) datastream (AD) for application to a first (DO1), a second (DO2) and a third (DO3) output of said demultiplexer (DEMUX) respectively, a digital to analog converter (DAC) coupled at its input to said first output (DO1) of said demultiplexer (DEMUX) and provided to convert said digital speech (DS) into said analog speech (AS), a decoder (D) coupled at its input to said second output (DO2) of said demultiplexer (DEMUX) and provided to decode said telephone service code (TSC) and to thereby generate said telephone service signalling (TSS), and a combining unit (C), a first input (CI1) of which is coupled to an output of said digital to analog converter (DAC) and a second input (CI2) of which is coupled to an output of said decoder (D) and which is provided to combine said analog speech (AS) and said telephone service signalling (TSS) into said analog MTS (Message Telephone Service) signal (TS) and to apply said analog MTS (Message Telephone Service) signal (TS) to an MTS output of said interface module (CO-IM, S-IM).

9. An interface module (CO-IM, S-IM) according to claim 8, characterized in that said interface module (CO-IM, S-IM) further includes first switching means (S1') with at least a first state input (1'') connected to said output of said combining unit (C) and a second state input (2'') connected to a first end of an independent link line (L'), and whose output is connected to said MTS output, and second switching means (S2') with at least a first state output (1''') connected to an input of said demultiplexer (DEMUX) and a second state output (2''') connected to a second end of said independent link line (L'), and to an input of which said transmit signal (S) is applied by said two-wire transmission line (TL), in such a way that when said first and second switching means (S1', S2') are brought in their second state, said transmit signal (S) is transported to said MTS output via the cascade connection of said second switching means (S2') said link line (L') and said first switching means (S1').

10. Telephone network including a central office station and a plurality of subscriber stations coupled to said central office station via transmission lines (TL), said central office station and said subscriber stations including interface modules (CO-IM, S-IM) provided to multiplex and demultiplex an analog MTS (Message Telephone Service) signal (TS), comprising analog speech as well as telephone service signalling, and an ADSL (Asymmetric Digital Subscriber Line) datastream (AD) for simultaneous transmission thereof over a said two-wire transmission line (TL), characterized in that to perform said multiplexing, a said interface module (CO-IM, S-IM) in said central office station and in each said subscriber station includes a fractionizing unit (F), to an input of which said analog MTS (Message Telephone Service) signal (TS) is applied and which is provided to fractionize said analog MTS( Message Telephone Service) signal (TS) to thereby generate said analog speech (AS) applied to a first output (FO1) thereof and said telephone service signalling (TSS) applied to a second output (FO2) thereof, an analog to digital converter (ADC), whose input is coupled to said first output (FO1) of said fractionizing unit (F) and which is provided to convert said analog speech (AS) into digital speech (DS), an encoder (E) coupled at its input to said second output (FO2) of said fractionizing unit (F) and provided to encode said telephone service signalling (TSS) into a telephone service code (TSC), and a multiplexer (MUX) to first (MI1), second (MI2) and third (MI3) inputs of which said digital speech (DS), said telephone service code (TSC) and said ADSL (Asymmetric Digital Subscriber Line) datastream (AD) are supplied respectively and which is provided to embed said digital speech (DS) and said telephone service code (TSC), which both form part of a digital MTS (Message Telephone Service) signal (DS, TSC), in frames out of said ADSL (Asymmetric Digital Subscriber Line) datastream (AD) to thereby constitute a transmit signal (S), and that to perform said demultiplexing, a said interface module (CO-IM, S-IM) in said central office station and in each said subscriber station includes a demultiplexer (DEMUX) whose input is coupled to said two-wire transmission line (TL) and which is provided to demultiplex said transmit signal (S) and to thereby regenerate said digital speech (DS), said telephone service code (TSC) and said ADSL (Asymmetric Digital Subscriber Line) datastream (AD) applied to a first (DO1), a second (DO2) and a third (DO3) output of said demultiplexer (DEMUX) respectively, a digital to analog converter (DAC) coupled at its input to said first output (DO1) of said demultiplexer (DEMUX) and provided to convert said digital speech (DS) into said analog speech (AS), a decoder (D) coupled at its input to said second output (DO2) of said demultiplexer (DEMUX) and provided to decode said telephone service code (TSC) and to thereby regenerate said telephone service signalling (TSS), and a combining unit (C), a first input (CI1) of which is coupled to an output of said digital to analog converter (DAC) and a second input (CI2) of which is coupled to an output of said decoder (D) and which is provided to combine said analog speech (AS) and said telephone service signalling (TSS) into said analog MTS (Message Telephone Service) signal (TS) and to apply said analog MTS (Message Telephone Service) signal (TS) to an MTS output of said interface module (CO-IM, S-IM).

## Patentansprüche

1. Verfahren zum Multiplexieren und Demultiplexieren eines analogen MTS-(Message Telephone Service)-Signals (TS), das analoge Sprache (AS) sowie Telefondienstsignalisierung (TSS) umfasst, und eines ADSL-(Asymmetric Digital Subcriber Line)-Datenstromes (AD) für die gleichzeitige Übertragung von diesen auf einer Übertragungsstrecke (TL), dadurch gekennzeichnet, dass die Multiplexierung einen ersten Schritt, in dem das analoge MTS-(Message Telephone Service)-Signal (TS) in ein digitales MTS-(Message Telephone Service)-Signal (DS, TSC) umgewandelt wird, und einen zweiten Schritt umfasst, in dem das digitale MTS-(Message Telephone Service)-Signal (DS, TS) in in dem ADSL- (Asymmetric Digital Subcriber Line)-Datenstrom (AD) enthaltene Datenrahmen eingebettet wird, wodurch ein Übertragungssignal (S) erzeugt wird, das auf die Übertragungsleitung (TL) gegeben wird, und dass die Demultiplexierung einen dritten Schritt, in dem das Übertragungssignal (S) in das digitale MTS-(Message Telephone Service)-Signal (DS, TSC) und den ADSL- (Asymmetric Digital Subcriber Line) -Datenstrom (AD) aufgeteilt wird, und einen vierten Schritt umfasst, in dem das digitale MTS-(Message Telephone Service)-Signal (DS, TSC) in das analoge MTS- (Message Telephone Service)-Signal (TS) umgewandelt wird.

2. Verfahren nach Anspruch 1, dadurch gekennzeichnet, dass wenn in dem ersten Schritt, dem zweiten Schritt, dem dritten Schritt oder dem vierten Schritt eine Störung auftritt, der Telefondienst durch Transportieren des analogen MTS-(Message Telephone Service)-Signals (TS) in seiner analogen Form zu und von der Übertragungsleitung (TL) jeweils über unabhängige Verknüpfungsleitungen (L, L') aufrechterhalten wird.

3. Verfahren nach Anspruch 1, dadurch gekennzeichnet, dass bei dem Multiplexieren der erste Schritt einen ersten Teilschritt, in dem das analoge MTS-(Message Telephone Service)-Signal (TS) in die analoge Sprache (AS) und die Telefondienstsignalisierung (TSS) zerlegt wird, einen zweiten Teilschritt, in dem die analoge Sprache (AS) in digitale Sprache (DS) umgewandelt wird, und einen dritten Teilschritt umfasst, in dem die Telefondienstsignalisierung (TSS) in einen Telefondienstcode (TSC) codiert wird, wobei die digitale Sprache (DS) und der Telefondienstcode (TSC) beide einen Teil des digitalen MTS-(Message Telephone Service)-Signals (DS, TSC) bilden und dass ferner beim Demultiplexen der vierte Schritt einen vierten Teilschritt, in dem der Telefondienstcode (TSC) in die Telefondienstsignalisierung (TSS) decodiert wird, einen fünften Teilschritt, in dem die digitale Sprache (DS) in die analoge Sprache (AS) umgewandelt wird, und einen sechsten Teilschritt umfasst, in dem die analoge Sprache (AS) und das Telefondienstsignal (TSS) kombiniert werden, wodurch das analoge MTS-(Message Telephone Service)-Signal (TS) erhalten wird.

4. Verfahren nach Anspruch 1, dadurch gekennzeichnet, dass bei dem Multiplexieren der zweite Schritt durchgeführt wird durch Modulieren des digitalen MTS-(Message Telephone Service)-Signals (DS, TSC) auf eine Teilmenge von Trägern, die Teil einer Menge von Trägern sind, auf die der ADSL-(Asymmetric Digital Subcriber Line)-Datenstrom (AD) moduliert wird, um das Übertragungssignal (S) zu bilden, und dass bei dem Demultiplexieren der dritte Schritt durchgeführt wird durch Demodulieren des digitalen MTS-(Message Telephone Service)-Signals (DS, TSC) aus der Teilmenge von Trägern, während der ADSL-(Asymmetric Digital Subcriber Line)-Datenstrom (AD) aus anderen in der Menge von Trägern enthaltenen Trägern demoduliert wird.

5. Verfahren nach Anspruch 1, dadurch gekennzeichnet, dass bei dem Multiplexieren der zweite Schritt einen Teilschritt, in dem das digitale MTS-(Message Telephone Service)-Signal (DS, TSC) in ATM-(Asynchronous Transfer Mode)-Zellen gepackt wird, und einen zusätzlichen Teilschritt umfasst, in dem die ATM-(Asynchronous Transfer Mode)-Zellen in dem ADSL-(Asymmetric Digital Subcriber Line)-Datenstrom eingebettet werden, wodurch das Übertragungssignal (S) erzeugt wird, und dass ferner bei dem Demultiplexieren der dritte Schritt einen inversen Teilschritt, in dem die ATM-(Asynchronous Transfer Mode)-Zellen aus dem Übertragungssignal (S) wiederhergestellt werden, und einen zusätzlichen entgegengesetzten Teilschritt umfasst, in dem die ATM-(Asynchrones Transfer Mode)-Zellen in das digitale MTS-(Message Telephone Service)-Signal (DS, TSC) entpackt werden.

6. Schnittstellenmodul (CO-IM, S-IM), das angepasst ist zum Multiplexieren eines analogen MTS-(Message Telephone Service)-Signals (TS), das analoge Sprache (AS) sowie Telefondienstsignalisierung (TSS) umfasst, und eines ADSL-(Asymmetric Digital Subcriber Line)-Datenstromes (AD), die gleichzeitig auf eine an das Schnittstellenmodul (CO-IM, S-IM) gekoppelte Zweidraht-Übertragungsleitung (TL) gegeben werden sollen, dadurch gekennzeichnet, dass das Schnittstellenmodul (CO-IM, S-IM) umfasst: eine Zerlegungseinheit (F), auf einen Eingang von der das analoge MTS-(Message Telephone Service)-Signal (TS) gegeben wird, und die eingerichtet ist, dieses analoge MTS-(Message Telephone Service)-Signal (TS) zu zerlegen, um so die an einen ersten Ausgang (FO1) von diesem angelegte analoge Sprache (AS) und die an einen zweiten Ausgang (FO2) von diesem angelegte Telefondienstsignalisierung (TSS) zu erzeugen, einen Analog-Digital-Wandler (ADC), dessen Eingang an den ersten Ausgang (FO1) der Zerlegungseinheit (F) gekoppelt ist und der vorgesehen ist, um die analoge Sprache (AS) in digitale Sprache (DS) umzuwandeln, einen Encoder (E), der an seinem Eingang an den zweiten Ausgang (FO2) der Zerlegungseinheit (F) gekoppelt ist und vorgesehen ist, um die Telefondienstsignalisierung (TSS) in einen Telefondienstcode (TSC) zu codieren, und einen Multiplexer (MUX), dessen erstem (MI1), zweitem (MI2) und drittem (MI3) Eingang jeweils die digitale Sprache (DS), der Telefondienstcode (TSC) bzw. der ADSL-(Asymmetric Digital Subcriber Line) -Datenstrom (AD) zugeführt werden, und der vorgesehen ist, um die digitale Sprache (DS) und den Telefondienstcode (TSC), die beide Teil eines digitalen MTS-(Message Telephone Service)-Signals (DS, TSC) sind, in Rahmen einzubetten, die in dem ADSL-(Asymmetric Digital Subcriber Line)-Datenstrom (AD) enthalten sind.

7. Schnittstellenmodul (CO-IM, S-IM) nach Anspruch 6, dadurch gekennzeichnet, dass das Schnittstellenmodul (CO-IM, S-IM) ferner ein erstes Schaltmittel (S1) mit wenigstens einem an den Eingang der Zerlegungseinheit (F) angeschlossenen Erstzustandsausgang (1) und einem an ein erstes Ende einer unabhängigen Verknüpfungsleitung (L) angeschlossenen Zweitzustandsausgang (2), wobei auf einen Eingang von diesem das analoge MTS-(Message Telephone Service)-Signal (TS) gegeben wird, und ein zweites Schaltmittel (S2) mit wenigstens einem an einen Ausgang des Multiplexers (MUX) angeschlossenen Erstzustandseingang (1') und einem an ein zweites Ende der unabhängigen Verknüpfungsleitung (L) angeschlossenen Zweitzustandseingang (2') umfasst, von dem ein Ausgang an die Zweidraht-Übertragungsleitung (TL) so gekoppelt ist, dass wenn das erste und zweite Schaltmittel (S1, S2) in ihren zweiten Zustand gebracht werden, das analoge MTS-(Message Telephone Service)-Signal (TS) in seiner analogen Form auf die Zweidraht-Übertragungsleitung über die Reihenschaltung des ersten Schaltmittels (S1) der Verknüpfungsleitung (L) und des zweiten Schaltmittels (S2) gegeben wird.

8. Schnittstellenmodul (CO-IM, S-IM), das angepasst ist, um ein analoges MTS-(Message Telephone Service)-Signal, das analoge Sprache (AS) sowie Telefondienstsignalisierung (TSS) umfasst, und einen ADSL-(Asymmetric Digital Subcriber Line)-Datenstrom (AD) aus einem dem Schnittstellenmodul (CO-IM, S-IM) über eine an das Schnittstellenmodul (CO-IM, S-IM) gekoppelte Übertragungsleitung (TL) zugeführten Übertragungssignal (S) zu demultiplexieren, dadurch gekennzeichnet, dass das Schnittstellenmodul (CO-IM, S-IM) umfasst: einen Demultiplexer (DEMUX), dessen Eingang an die Übertragungsleitung (TL) gekoppelt ist, und der angepasst ist, um das Übertragungssignal (S) zu demultiplexieren und so digitale Sprache (DS), einen Telefondienstcode (TSC) und den ADSL-(Asymmetric Digital Subcriber Line)-Datenstrom (AD) zur Aufgabe auf einen ersten (DO1), zweiten (DO2) bzw. dritten (DO3) Ausgang des Demultiplexers (DEMUX) zu erzeugen, einen an seinem Eingang an den ersten Ausgang (DO1) des Demultiplexers (DEMUX) gekoppelten und zum Umwandeln der digitalen Sprache (DS) in die analoge Sprache (AS) vorgesehenen Digital-Analog-Wandler (DAC), einen an seinem Eingang an den zweiten Ausgang (DO2) des Demultiplexers (DEMUX) gekoppelten und zum Decodieren des Telefondienstcodes (TSC) und zum dadurch Erzeugen der Telefondienstsignalisierung (TSS) vorgesehenen Decoder (D) und eine Kombiniereinheit (C), von der ein erster Eingang (CI1) an einen Ausgang des Digital-Analog-Wandlers (DAC) gekoppelt ist und von der ein zweiter Eingang (CI2) an einen Ausgang des Decoders (D) gekoppelt ist, und die vorgesehen ist, um die analoge Sprache (AS) und die Telefondienstsignalisierung (TSS) zu dem analogen MTS-(Message Telephone Service)-Signal (TS) zu kombinieren und das analoge MTS-(Message Telephone Service)-Signal (TS) an einen MTS-Ausgang des Schnittstellenmoduls (CO-IM, S-IM) anzulegen.

9. Schnittstellenmodul (CO-IM, S-IM) nach Anspruch 8, dadurch gekennzeichnet, dass das Schnittstellenmodul (CO-IM, S-IM) ferner ein erstes Schaltmittel (S1') mit wenigstens einem an den Ausgang der Kombiniereinheit (C) angeschlossenen Erstzustandseingang (1'') und einem an ein erstes Ende einer unabhängigen Verknüpfungsleitung (L') angeschlossenen Zweitzustandseingang (2''), dessen Ausgang an den MTS-Ausgang angeschlossen ist, und ein zweites Schaltmittel (S2') mit wenigstens einem an einen Eingang des Demultiplexers (DEMUX) angeschlossenen Erstzustandseingang (1''') und einem an ein zweites Ende der unabhängigen Verknüpfungsleitung (L') angeschlossenen Zweitzustandsausgang (2''') umfasst, wobei an einen Eingang von diesem das Übertragungssignal (S) über die Zweidraht-Übertragungsleitung (TL) derart angelegt wird, dass wenn das erste und zweite Schaltmittel (S1', S2') in ihren zweiten Zustand gebracht werden, das Übertragungssignal (S) zum MTS-Ausgang über die Hintereinanderschaltung des zweiten Schaltmittels (S2'), der Verknüpfungsleitung (L') und des ersten Schaltmittels (S1') transportiert wird.

10. Telefonnetz mit einer zentralen Amtsstation und einer Mehrzahl von an die zentrale Amtsstation über Teilnehmerleitungen (TL) gekoppelten Teilnehmerstationen, wobei die zentrale Amtsstation und die Teilnehmerstationen Schnittstellenmodule (CO-IM, S-IM) umfassen, die vorgesehen sind zum Multiplexieren und Demultiplexieren eines analogen MTS-(Message Telephone Service)-Signals, das analoge Sprache sowie Telefondienstsignalisierung umfasst, und eines ADSL-(Asymmetric Digital Subcriber Line)-Datenstromes (AD) für deren gleichzeitige Übertragung über die Zweidraht-Übertragungsleitung (TL), dadurch gekennzeichnet, dass zum Durchführen der Multiplexierung eines der Schnittstellenmodule (CO-IM, S-IM) in der zentralen Amtsstation und in jeder der Teilnehmerstationen eine Zerlegungseinheit (F), an einen Eingang von der das analoge MTS-(Message Telephone Service)-Signal (TS) angelegt wird und die vorgesehen ist, um das analoge MTS-(Message Telephone Service)-Signal (TS) zu zerlegen und dadurch die an einen ersten Ausgang (FO1) von dieser angelegte analoge Sprache (AS) und die an einen zweiten Ausgang (F02) von dieser angelegte Telefondienstsignalisierung (TSS) zu erzeugen, einen Analog-Digital-Wandler (ADC), dessen Eingang an den ersten Ausgang (FO1) der Zerlegungseinheit (F) gekoppelt ist und der vorgesehen ist, um die analoge Sprache (AS) in digitale Sprache (DS) umzuwandeln, einen Encoder (E), der an seinem Eingang an den zweiten Ausgang (FO2) der Zerlegungseinheit (F) gekoppelt ist und vorgesehen ist, um die Telefondienstsignalisierung (TSS) in einen Telefondienstcode (TSC) zu codieren, und einen Multiplexer (MUX) umfasst, an dessen ersten (MI1), zweiten (MI2) und dritten (MI3) Eingang jeweils die digitale Sprache (DS), der Telefondienstcode (TSC) bzw. der ADSL-(Asymmetric Digital Subcriber Line)-Datenstrom angelegt werden, und der vorgesehen ist, um die digitale Sprache (DS) und den Telefondienstcode (TSC), die beide Teil eines digitalen MTS-(Message Telephone Service)-Signals (DS, TSC) sind, in Rahmen des ADSL-(Asymmetric Digital Subcriber Line)-Datenstromes (AD) einzubetten und so ein Übertragungssignal (S) zu bilden, und dass zum Durchführen der Demultiplexierung das Schnittstellenmodul (CO-IM, S-IM) in der zentralen Amtsstation und in jeder der Teilnehmerstationen einen Demultiplexer (DEMUX), dessen Eingang an die Zweidraht-Übertragungsleitung (TL) gekoppelt ist, und der vorgesehen ist, um das Übertragungssignal (S) zu demultiplexieren und dadurch die digitale Sprache (DS), den Telefondienstcode (TSC) und den ADSL-(Asymmetric Digital Subcriber Line)-Datenstrom (AD) wiederherzustellen, die auf einen ersten (DO1), einen zweiten (DO2) bzw. einen dritten (DO3) Ausgang des Demultiplexers (DEMUX) gegeben werden, einen Digital-Analog-Wandler (DAC), der an seinem Eingang an den ersten Ausgang (DO1) des Demultiplexers (DEMUX) gekoppelt ist und vorgesehen ist, um die digitale Sprache (DS) in die analoge Sprache (AS) umzuwandeln, einen Decoder (D), der an seinem Eingang an den zweiten Ausgang (DO2) des Demultiplexers (DEMUX) gekoppelt ist und vorgesehen ist, um den Telefondienstcode (TSC) zu decodieren und so die Telefondienstsignalisierung (TSS) wiederherzustellen, und eine Kombiniereinheit (C) umfasst, von der ein erster Eingang (CI1) an einen Ausgang des Digital-Analog-Wandlers (DAC) und von der ein zweiter Eingang (CI2) an einen Ausgang des Decoders (D) gekoppelt ist, und die vorgesehen ist, um die analoge Sprache (AS) und die Telefondienstsignalisierung (TSS) zu dem analogen MTS-(Message Telephone Service)-Signal (TS) zu kombinieren und das analoge MTS- (Message Telephone Service)-Signal (TS) auf einen MTS-Ausgang des Schnittstellenmoduls (CO-IM, S-IM) zu geben.

## Revendications

1. Procédé pour multiplexer et démultiplexer un signal analogique MTS (service de messages de téléphonie) (TS), comprenant des informations de parole analogique (AS) ainsi que de signalisation de service téléphonique (TSS) et un flux de données ADSL (ligne d'abonné numérique asymétrique) (AD) pour leur transmission simultanée sur une ligne de transmission (TL), caractérisé en ce que ledit multiplexage comprend une première étape dans laquelle ledit signal analogique MTS (service de messages de téléphonie) (TS) est converti en un signal numérique MTS (service de messages de téléphonie) (DS, TSC) et une seconde étape dans laquelle ledit signal numérique MTS (service de messages de téléphonie) (DS, TSC) est imbriqué dans des trames de données comprises dans ledit flux de données ADSL (ligne d'abonné numérique asymétrique) (AD), générant de ce fait un signal de transmission (S) qui est appliqué à ladite ligne de transmission (TL), et en ce que ledit démultiplexage comprend une troisième étape dans laquelle ledit signal de transmission (S) est séparé en ledit signal numérique MTS (service de messages de téléphonie) (DS, TSC) et ledit flux de données ADSL (ligne d'abonné numérique asymétrique) (AD) et une quatrième étape dans laquelle ledit signal numérique MTS (service de messages de téléphonie) (DS, TSC) est converti en ledit signal analogique MTS (service de messages de téléphonie) (TS).

2. Procédé selon la revendication 1, caractérisé en ce que, dans le cas où une défaillance survient au cours de ladite première étape, de ladite seconde étape, de ladite troisième étape ou de ladite quatrième étape, le service téléphonique est maintenu par le transport dudit signal analogique MTS (service de messages de téléphonie) (TS) sous sa forme analogique vers et à partir de ladite ligne de transmission (TL), respectivement, par l'intermédiaire des lignes de liaison indépendantes (L, L').

3. Procédé selon la revendication 1, caractérisé en ce que dans ledit multiplexage, ladite première étape comprend une première sous-étape dans laquelle ledit signal analogique MTS (service de messages de téléphonie) (TS) est fractionné en lesdites informations de parole analogique (AS) et de signalisation de service téléphonique (TSS), une seconde sous-étape dans laquelle ladite parole analogique (AS) est convertie en parole numérique (DS) et une troisième sous-étape dans laquelle ladite signalisation de service téléphonique (TSS) est codée en un code de service téléphonique (TSC), ladite parole numérique (DS) et ledit code de service téléphonique (TSC) faisant tous deux partie dudit signal numérique MTS (service de messages de téléphonie) (DS, TSC) et, de plus, en ce que, dans ledit multiplexage, ladite quatrième étape comprend une quatrième sous-étape dans laquelle ledit code de service téléphonique (TSC) est décodé en ladite signalisation de service téléphonique (TSS), une cinquième sous-étape dans laquelle ladite parole numérique (DS) est convertie en ladite parole analogique (AS) et une sixième sous-étape dans laquelle ladite parole analogique (AS) et ledit signal de service téléphonique (TSS) sont combinés, obtenant de ce fait ledit signal analogique MTS (service de messages de téléphonie) (TS).

4. Procédé selon la revendication 1, caractérisé en ce que, dans ledit multiplexage, ladite seconde étape est exécutée en modulant ledit signal numérique MTS (service de messages de téléphonie) (DS, TSC) sur un sous-ensemble de porteuses qui fait partie d'un ensemble de porteuses sur lesquelles ledit flux de données ADSL (ligne d'abonné numérique asymétrique) (AD) est modulé afin de former ledit signal de transmission (S), et en ce que, dans ledit démultiplexage, ladite troisième étape est exécutée en démodulant ledit signal numérique MTS (service de messages de téléphonie) (DS, TSC) dudit sous-ensemble de porteuses, tandis que ledit flux de données ADSL (ligne d'abonné numérique asymétrique) (AD) est démodulé à partir des autres porteuses comprises dans ledit ensemble de porteuses.

5. Procédé selon la revendication 1, caractérisé en ce que, dans ledit multiplexage, ladite seconde étape comprend une sous-étape dans laquelle ledit signal numérique MTS (service de messages de téléphonie) (DS, TSC) est enfermé dans des cellules ATM (mode de transfert asynchrone) et une sous-étape supplémentaire dans laquelle lesdites cellules ATM (mode de transfert asynchrone) sont imbriquées dans ledit flux de données ADSL (ligne d'abonné numérique asymétrique) (AD), générant de ce fait ledit signal de transmission (S), et en ce que, de plus, dans ledit démultiplexage, ladite troisième étape comprend une sous-étape inverse dans laquelle lesdites cellules ATM (mode de transfert asynchrone) sont régénérées à partir dudit signal de transmission (S) et une sous-étape inverse supplémentaire dans laquelle lesdites cellules ATM (mode de transfert asynchrone) sont extraites dudit signal numérique MTS (service de messages de téléphonie) (DS, TSC).

6. Module d'interface (CO-IM, S-IM) adapté pour démultiplexer un signal analogique MTS (service de messages de téléphonie) (TS), comprenant des informations de parole analogique (AS) et de signalisation de service téléphonique (TSS) et un flux de données ADSL (ligne d'abonné numérique asymétrique) (AD) à appliquer simultanément à une ligne de transmission bifilaire (TL) couplée audit module d'interface (CO-IM, S-IM), caractérisé en ce que ledit module d'interface (CO-IM, S-IM) comprend une unité de fractionnement (F), à une entrée de laquelle ledit signal analogique MTS (service de messages de téléphonie) (TS) est appliqué et qui est adaptée pour fractionner ledit signal analogique MTS (service de messages de téléphonie) (TS) pour, de ce fait, générer ladite parole analogique (AS) appliquée à une première sortie (FO1) de celle-ci et ladite signalisation de service téléphonique (TSS) appliquée à une seconde sortie (FO2) de celle-ci, un convertisseur analogique-numérique (ADC), dont l'entrée est couplée à ladite sortie (FO1) de ladite unité de fractionnement (F) et qui est prévu pour convertir ladite parole analogique (AS) en parole numérique (DS), un codeur (E) dont l'entrée est couplée à ladite seconde sortie (FO2) de ladite unité de fractionnement (F) et prévu pour coder ladite signalisation de service téléphonique (TSS) en un code de service téléphonique (TSC) et un multiplexeur (MUX) aux première (MI1), seconde (MI2) et troisième (MI3) entrées duquel ladite parole numérique (DS), ledit code de service téléphonique (TSC) et ledit flux de données ADSL (ligne d'abonné numérique asymétrique) (AD) sont respectivement fournis et qui est prévu pour imbriquer ladite parole numérique (DS) et ledit code de service téléphonique (TSC), qui font tous deux partie d'un signal numérique MTS (service de messages de téléphonie) (DS, TSC), dans des trames comprises dans ledit flux de données ADSL (ligne d'abonné numérique asymétrique) (AD).

7. Module d'interface (CO-IM, S-IM) selon la revendication 6, caractérisé en ce que ledit module d'interface (CO-IM, S-IM) comprend, de plus, des premiers moyens de commutation (S1) avec au moins une sortie de premier état (1) connectée à ladite entrée de ladite unité de fractionnement (F) et une sortie de second état (2) connectée à une première extrémité d'une ligne de liaison indépendante (L), et à une entrée desquels ledit signal analogique MTS (service de messages de téléphonie) (TS) est appliqué, et des seconds moyens de commutation (S2) avec au moins une entrée de premier état (1') connectée à une sortie dudit multiplexeur (MUX) et une entrée de second état (2') connectée à une seconde extrémité de ladite ligne de liaison indépendante (L) et dont une sortie est connectée à ladite ligne de transmission bifilaire (TL), d'une manière telle que, lorsque lesdits premiers et seconds moyens de commutation (S1, S2) sont mis dans leur second état, ledit signal analogique MTS (service de messages de téléphonie) (TS) est appliqué sous sa forme analogique à ladite ligne de transmission bifilaire (TL) via la connexion en cascade desdits premiers moyens de commutation (S1), de ladite ligne de liaison (L) et desdits seconds moyens de commutation (S2).

8. Module d'interface (CO-IM, S-IM) adapté pour démultiplexer un signal analogique MTS (service de messages de téléphonie) (TS), comprenant des informations de parole analogique (AS) et de signalisation de service téléphonique (TSS) et un flux de données ADSL (ligne d'abonné numérique asymétrique) (AD) provenant d'un signal de transmission (S) appliqué audit module d'interface (CO-IM, S-IM) par l'intermédiaire d'une ligne de transmission (TL) connectée audit module d'interface (CO-IM, S-IM), caractérisé en ce que ledit module d'interface (CO-IM, S-IM) comprend un démultiplexeur (DEMUX) dont l'entrée est couplée à ladite ligne de transmission (TL) et qui est adapté pour démultiplexer ledit signal de transmission (S) et pour générer de ce fait la parole numérique (DS), un code de service téléphonique (TSC) et ledit flux de données ADSL (ligne d'abonné numérique asymétrique) (AD) afin qu'ils soient respectivement appliqués à une première (DO1), une seconde (DO2) et une troisième (DO3) sorties dudit démultiplexeur (DEMUX), un convertisseur numérique-analogique (DAC) dont l'entrée est connectée à ladite première sortie (DO1) dudit démultiplexeur (DEMUX) et prévu pour convertir ladite parole numérique (DS) en ladite parole analogique (AS), un décodeur (D) dont l'entrée est couplée à ladite seconde sortie (DO2) dudit démultiplexeur (DEMUX) et prévu pour décoder ledit code de service téléphonique (TSC) et pour générer de ce fait ladite signalisation de service téléphonique (TSS), et une unité de combinaison (C), dont une première entrée (CI1) est couplée à une sortie dudit convertisseur numérique-analogique (DAC) et dont une seconde entrée (CI2) est couplée à une sortie dudit décodeur (D) et qui est prévu pour combiner ladite parole analogique (AS) et ladite signalisation de service téléphonique (TSS) en ledit signal analogique MTS (service de messages de téléphonie) (TS) et pour appliquer ledit signal analogique MTS (service de messages de téléphonie) (TS) à une sortie MTS dudit module d'interface (CO-IM, S-IM).

9. Module d'interface (CO-IM, S-IM) selon la revendication 8, caractérisé en ce que ledit module d'interface (CO-IM, S-IM) comprend, de plus, des premiers moyens de commutation (S1') avec au moins une entrée de premier état (1'') connectée à ladite sortie de ladite unité de combinaison (C) et une entrée de second état (2") connectée à une première extrémité d'une ligne de liaison indépendante (L'), et dont la sortie est connectée à ladite sortie MTS, et des seconds moyens de commutation (S2') avec au moins une sortie de premier état (1''') connectée à une entrée dudit démultiplexeur (DEMUX) et une sortie de second état (2''') connectée à une seconde extrémité de ladite ligne de liaison indépendante (L'), et à une entrée duquel ledit signal de transmission (S) est appliqué par ladite ligne de transmission bifilaire (TL) d'une manière telle que, lorsque lesdits premiers et seconds moyens de commutation (S1', S2') sont mis dans leur second état, ledit signal de transmission (S) est transporté vers ladite sortie MTS par la connexion en cascade desdits seconds moyens de commutation (S2'), de ladite ligne de liaison (L') et desdits premiers moyens de commutation (S1').

10. Réseau téléphonique comprenant un central téléphonique et une pluralité de postes d'abonnés couplés audit central téléphonique par l'intermédiaire de lignes de transmission (TL), ledit central téléphonique et lesdits postes d'abonnés comprenant des modules d'interface (CO-IM, S-IM) prévus pour multiplexer et pour démultiplexer un signal analogique MTS (service de messages de téléphonie) (TS), comprenant des informations de parole analogique et de signalisation de service téléphonique, et un flux de données ADSL (ligne d'abonné numérique asymétrique) (AD) pour leur transmission simultanée sur une dite ligne de transmission bifilaire (TL), caractérisé en ce que, pour effectuer ledit multiplexage, ledit module d'interface (CO-IM, S-IM) dans ledit central téléphonique et dans chacun desdits postes téléphoniques d'abonnés comprend une unité de fractionnement (F) à une entrée de laquelle ledit signal analogique MTS (service de messages de téléphonie) (TS) est appliqué et qui est prévue pour fractionner ledit signal analogique MTS (service de messages de téléphonie) (TS) afin de générer de ce fait ladite parole analogique (AS) appliquée à une première sortie (FO1) de celle-ci et ladite signalisation de service téléphonique (TSS) appliquée à une seconde sortie (FO2) de celle-ci, un convertisseur analogique-numérique (ADC) dont l'entrée est couplée à ladite première sortie (FO1) de ladite unité de fractionnement (F) et qui est prévu pour convertir ladite parole analogique (AS) en parole numérique (DS), un codeur (E) dont l'entrée est couplée à ladite seconde sortie (FO2) de ladite unité de fractionnement (F) et prévu pour coder ladite signalisation de service téléphonique (TSS) en un code de service téléphonique (TSC), et un multiplexeur (MUX) à la première (MI1), à la seconde (MI2) et à la troisième (MI3) entrées duquel ladite parole numérique (DS), ledit code de service téléphonique (TSC) et ledit flux de données ADSL (ligne d'abonné numérique asymétrique) (AD) sont respectivement appliqués et qui est prévu pour imbriquer ladite parole numérique (DS) et ledit code de service téléphonique (TSC), qui font tous deux partie d'un signal numérique MTS (service de messages de téléphonie) (DS, TSC), dans des trames parmi ledit flux de données ADSL (ligne d'abonné numérique asymétrique) (AD) afin de constituer de ce fait un signal de transmission (S), et en ce que, afin d'effectuer ledit démultiplexage, un dit module d'interface (CO-IM, S-IM) dans ledit central téléphonique et dans chacun desdits postes d'abonnés comprend un démultiplexeur (DEMUX) dont l'entrée est couplée à ladite ligne de transmission bifilaire (TL) et qui est prévu pour démultiplexer ledit signal de transmission (S) et pour régénérer de ce fait ladite parole numérique (DS), ledit code de service téléphonique (TSC) et ledit flux de données ADSL (ligne d'abonné numérique asymétrique) (AD) appliqués, respectivement, à une première (DO1), une seconde (DO2) et une troisième (DO3) sorties dudit démultiplexeur (DEMUX), un convertisseur numérique-analogique (DAC) dont l'entrée est couplée à ladite première sortie (DO1) dudit démultiplexeur (DEMUX) et prévu pour convertir ladite parole numérique (DS) en ladite parole analogique (AS), un décodeur (D) dont l'entrée est couplée à ladite seconde sortie (DO2) dudit démultiplexeur (DEMUX) et prévu pour décoder ledit code de service téléphonique (TSC) et pour régénérer de ce fait ladite signalisation de service téléphonique (TSS), et une unité de combinaison (C), dont une première entrée (CI1) est couplée à une sortie dudit convertisseur numérique-analogique (DAC) et dont une seconde entrée (CI2) est couplée à une sortie dudit décodeur (D) et qui est prévu pour combiner lesdites informations de parole analogique (AS) et de signalisation de service téléphonique (TSS) en ledit signal MTS (service de messages de téléphonie) analogique (TS) et pour appliquer ledit signal analogique MTS (service de messages de téléphonie) (TS) à une sortie MTS dudit module d'interface (CO-IM, S-IM).
